# EUROPEAN PATENT APPLICATION

(11) **EP 4 560 566 A1**
(43) Date of publication of application: **28.05.2025**
(21) Application number: 24214652.0
(22) Date of filing: 21.11.2024
(51) Int. Cl.: G06T 5/73, G06T 11/00

(54) **METHOD FOR PERFORMING CARDIAC MOTION COMPENSATION IN COMPUTED TOMOGRAPHY (CT) IMAGING SYSTEM AND APPARATUS FOR PERFORMING CARDIAC MOTION COMPENSATION IN COMPUTED TOMOGRAPHY (CT) IMAGING SYSTEM**

(30) Priority: 21.11.2023 US 202318516450
(71) Applicant: Canon Medical Systems Corporation, Tochigi 324-0036 (JP)
(72) Inventor: TANG, Qiulin, Otawara-shi (JP); ZHOU, Jian, Otawara-shi (JP); CAI, Liang, Otawara-shi (JP); LIU, Chih-chieh, Otawara-shi (JP); YU, Zhou, Otawara-shi (JP)
(74) Representative: Marks & Clerk LLP

(57) **Abstract**

A method for performing cardiac motion compensation in a computed tomography (CT) imaging system is provided. The method includes receiving projection data acquired from an imaging object by the CT imaging system. The method also includes, until a predefined termination criterion is met, iteratively reconstructing, based on estimated cardiac motion, the received projection data to generate a motion-compensated image of the imaging object, determining a vessel region of interest (ROI) within the generated motion-compensated image, and updating the estimated cardiac motion, based on an optimization cost function associated with the determined vessel ROI. The method further includes outputting, as a final reconstructed image of the imaging object, the generated motion-compensated image.

## Description

### FIELD

Embodiments described herein relate generally to a method for performing cardiac motion compensation in a computed tomography (CT) imaging system and an apparatus for performing cardiac motion compensation in a computed tomography (CT) imaging system.

### BACKGROUND

Cardiac CT is one of the most challenging fields in medical imaging, because the heart is constantly moving, with both regular and irregular motion patterns. Thus, advanced imaging techniques are required to capture clear cardiac images while the heart and the blood vessels are in motion.

Typically, compensation methods for restoring the image quality are applied to mitigate the influence of artifacts induced by cardiac motion. Most of these methods have two major phases: (1) estimation of cardiac motion, and (2) incorporation of the estimated motion into the image reconstruction process to counter motion artifacts. The performance of these motion compensation methods is mainly determined by the accuracy of the motion estimation phase.

It is desirable to enhance current cardiac motion compensation approaches.

### SUMMARY OF INVENTION

A method for performing cardiac motion compensation in a computed tomography (CT) imaging system according to an embodiment comprises: receiving projection data acquired from an imaging object by the CT imaging system; until a predefined termination criterion is met, iteratively reconstructing, based on estimated cardiac motion, the received projection data to generate a motion-compensated image of the imaging object, determining a vessel region of interest (ROI) within the generated motion-compensated image, and updating the estimated cardiac motion, based on an optimization cost function associated with the determined vessel ROI; and outputting, as a final reconstructed image of the imaging object, the generated motion-compensated image.

For a first iteration, the estimated cardiac motion may be set to a predefined value.

The predefined termination criterion may be that a predefined number of iterations are completed, or that the optimization cost function reaches a predefined threshold.

The method may further comprise reconstructing the received projection data to generate an image without motion compensation of the imaging object; and performing, based on the generated image without motion compensation, vessel segmentation to develop a vessel region mask, wherein the determining step further comprises identifying, based on the developed vessel region mask, a region within the generated motion-compensated image, as the determined vessel ROI, and the updating step further comprises calculating cardiac motion to minimize a loss function of the determined vessel ROI, and updating the estimated cardiac motion to the calculated cardiac motion.

The step of performing vessel segmentation may further comprise: extracting a cardiac vessel skeleton, based on the generated image without motion compensation, and forming the developed vessel region mask by generating a region for each branch of the extracted cardiac vessel skeleton, the region covering a tubular area and an extent of motion of the tubular area, the tubular area representing a vessel corresponding to the branch of the extracted cardiac vessel skeleton.

The tubular area may be centered around the branch of the extracted cardiac vessel skeleton and has a radius equal to a predefined value at a starting point of the branch, wherein along an axial direction of the branch, the radius of the tubular area gradually decreases from the starting point to an endpoint of the branch.

The extracting step may further comprise: executing, on the generated image without motion compensation, vesselness-filtering-based, dynamic-growing-based, or deep-learning-based vessel segmentation to extract the cardiac vessel skeleton.

The loss function may be based on an entropy of the determined vessel ROI, an edge function of the determined vessel ROI, or a combination thereof.

The determining step may further comprise performing, based on the generated motion-compensated image, vessel segmentation to develop a vessel region mask, and identifying, based on the developed vessel region mask, a region within the generated motion-compensated image, as the determined vessel ROI, and the updating step further comprises calculating cardiac motion to minimize a loss function of the determined vessel ROI, and updating the estimated cardiac motion to the calculated cardiac motion.

The step of performing vessel segmentation may further comprises: extracting a cardiac vessel skeleton, based on the generated motion-compensated image, and forming the developed vessel region mask by generating a region for each branch of the extracted cardiac vessel skeleton, the region covering a tubular area and an extent of motion of the tubular area, the tubular area representing a vessel corresponding to the branch of the extracted cardiac vessel skeleton.

The tubular area may be centered around the branch of the extracted cardiac vessel skeleton and has a radius equal to a predefined value at a starting point of the branch, wherein along an axial direction of the branch, the radius of the tubular area gradually decreases from the starting point to an endpoint of the branch.

The method may, further comprise: reconstructing the received projection data to generate an image without motion compensation of the imaging object; and performing, based on the generated image without motion compensation, vessel segmentation to develop a vessel template and a vessel region mask, wherein the determining step further comprises identifying, based on the developed vessel region mask, a region within the generated motion-compensated image, as the determined vessel ROI, and the updating step further comprises calculating cardiac motion to maximize a similarity between the determined vessel ROI and the developed vessel template, and updating the estimated cardiac motion to the calculated cardiac motion.

The step of performing vessel segmentation may further comprise: extracting a cardiac vessel skeleton, based on the generated image without motion compensation, forming the developed vessel template by generating a tubular area for each branch of the extracted cardiac vessel skeleton, the tubular area representing a vessel corresponding to the branch of the extracted cardiac vessel skeleton, and forming the developed vessel region mask by generating a region for each branch of the extracted cardiac vessel skeleton, the region covering the tubular area and an extent of motion of the tubular area.

The tubular area may be centered around the branch of the extracted cardiac vessel skeleton and has a radius equal to a predefined value at a starting point of the branch, where along an axial direction of the branch, the radius of the tubular area gradually decreases from the starting point to an endpoint of the branch.

The determining step may further comprise: performing, based on the generated motion-compensated image, vessel segmentation to develop a vessel region mask and a vessel template, and identifying, based on the developed vessel region mask, a region within the generated motion-compensated image, as the determined vessel ROI, and the updating step further comprises calculating cardiac motion to maximize a similarity between the determined vessel ROI and the developed vessel template, and updating the estimated cardiac motion to the calculated cardiac motion.

The method may, further comprise: reconstructing the received projection data to generate an image without motion compensation of the imaging object; and performing, based on the generated image without motion compensation, vessel segmentation to develop a vessel template and a vessel region mask, wherein the determining step further comprises identifying, based on the developed vessel region mask, a region within the generated motion-compensated image, as the determined vessel ROI, and the updating step further comprises calculating cardiac motion to minimize an optimization cost function, weighted terms of the optimization cost function including a loss function of the determined vessel ROI, and a similarity between the determined vessel ROI and the developed vessel template, and updating the estimated cardiac motion to the calculated cardiac motion.

The step of performing vessel segmentation may further comprises: extracting a cardiac vessel skeleton, based on the generated image without motion compensation, forming the developed vessel template by generating a tubular area for each branch of the extracted cardiac vessel skeleton, the tubular area representing a vessel corresponding to the branch of the extracted cardiac vessel skeleton, and forming the developed vessel region mask by generating a region for each branch of the extracted cardiac vessel skeleton, the region covering the tubular area and an extent of motion of the tubular area.

The tubular area may be centered around the branch of the extracted cardiac vessel skeleton and has a radius equal to a predefined value at a starting point of the branch, wherein along an axial direction of the branch, the radius of the tubular area gradually decreases from the starting point to an endpoint of the branch.

The determining step may further comprise: performing, based on the generated motion-compensated image, vessel segmentation to develop a vessel region mask and a vessel template, and identifying, based on the developed vessel region mask, a region within the generated motion-compensated image, as the determined vessel ROI, and the updating step further comprises calculating cardiac motion to minimize an optimization cost function, weighted terms of the optimization cost function including a loss function of the determined vessel ROI, and a similarity between the determined vessel ROI and the developed vessel template, and updating the estimated cardiac motion to the calculated cardiac motion.

An apparatus for performing cardiac motion compensation in a computed tomography (CT) imaging system according to an embodiment, comprises processing circuitry configured to: receive projection data acquired from an imaging object by the CT imaging system; until a predefined termination criterion is met, iteratively reconstruct, based on estimated cardiac motion, the received projection data to generate a motion-compensated image of the imaging object, determine a vessel region of interest (ROI) within the generated motion-compensated image, and update the estimated cardiac motion, based on an optimization cost function associated with the determined vessel ROI; and output, as a final reconstructed image of the imaging object, the generated motion-compensated image.

### BRIEF DESCRIPTION OF THE DRAWINGS

FIG. 1 shows a block diagram of an exemplary apparatus 100 for performing cardiac motion estimation and compensation in a CT imaging system, in accordance with embodiments of the disclosure;
FIG. 2 shows a flow chart of an exemplary procedure 200 for performing cardiac motion estimation and compensation in a CT imaging system, in accordance with embodiments of the disclosure;
FIG. 3 shows a block diagram of an exemplary apparatus 300 for performing cardiac motion estimation and compensation in a CT imaging system, in accordance with one embodiment of the disclosure;
FIG. 4 shows an exemplary cardiac vessel skeleton extracted based on an image of an imaging object, in accordance with one embodiment of the disclosure;
FIG. 5 shows an exemplary cardiac vessel template developed based on the extracted cardiac vessel skeleton, in accordance with one embodiment of the disclosure;
FIG. 6 shows a flow chart of an exemplary procedure 600 for performing cardiac motion estimation and compensation in a CT imaging system, in accordance with one embodiment of the disclosure;
FIG. 7 shows a block diagram of an exemplary apparatus 700 for performing cardiac motion estimation and compensation in a CT imaging system, in accordance with one embodiment of the disclosure;
FIG. 8 shows a flow chart of an exemplary procedure 800 for performing cardiac motion estimation and compensation in a CT imaging system, in accordance with one embodiment of the disclosure;
FIG. 9 shows a block diagram of an exemplary apparatus 900 for performing cardiac motion estimation and compensation in a CT imaging system, in accordance with one embodiment of the disclosure;
FIG. 10 shows a flow chart of an exemplary procedure 1000 for performing cardiac motion estimation and compensation in a CT imaging system, in accordance with one embodiment of the disclosure;
FIG. 11 shows a block diagram of an exemplary apparatus 1100 for performing cardiac motion estimation and compensation in a CT imaging system, in accordance with one embodiment of the disclosure;
FIG. 12 shows a flow chart of an exemplary procedure 1200 for performing cardiac motion estimation and compensation in a CT imaging system, in accordance with one embodiment of the disclosure; and
FIG. 13 shows a schematic block diagram of an exemplary CT imaging system that can incorporate the techniques disclosed herein.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting.

For example, the order of discussion of the different steps as described herein has been presented for the sake of clarity. In general, these steps can be performed in any suitable order. Additionally, although each of the different features, techniques, configurations, etc. herein may be discussed in different places of this disclosure, it is intended that each of the concepts can be executed independently of each other or in combination with each other. Accordingly, the present disclosure can be embodied and viewed in many different ways.

Furthermore, as used herein, the words "a," "an," and the like generally carry a meaning of "one or more," unless stated otherwise.

This disclosure relates to a method and apparatus that can integrate motion estimation and motion compensation, instead of executing the two phases independently. By doing so, the accuracy of motion estimation can be enhanced during motion compensation, and the efficiency of motion compensation can be improved through the motion estimation process. The disclosure also introduces a method for utilizing vessel segmentation in the combined estimation-compensation procedure. Moreover, the disclosure provides detailed workflows for implementing this framework.

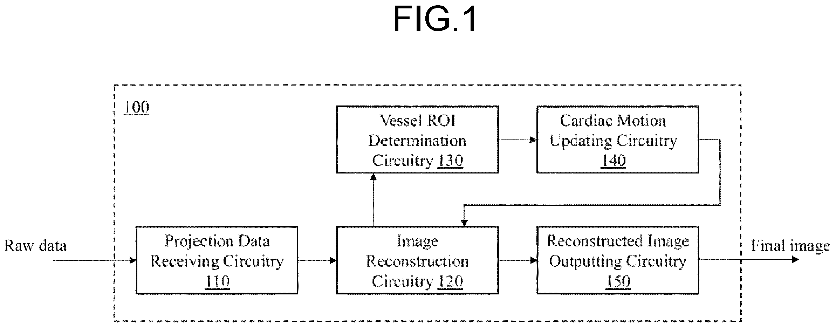

FIG. 1 shows a block diagram of an exemplary apparatus 100 for performing cardiac motion estimation and compensation in a CT imaging system, in accordance with embodiments of the disclosure. The apparatus 100 includes projection data receiving circuitry 110, image reconstruction circuitry 120, vessel region of interest (ROI) determination circuitry 130, cardiac motion updating circuitry 140, and reconstructed image outputting circuitry 150.

The projection data receiving circuitry receives raw projection data acquired from an imaging object by the CT imaging system, and sends the data to the image reconstruction circuitry 120.

Based on estimated cardiac motion, the image reconstruction circuitry 120 reconstructs the projection data to generate a motion-compensated image of the imaging object, and sends the generated image to the vessel ROI determination circuitry 130.

The vessel ROI determination circuitry 130 determines a vessel ROI within the generated motion-compensated image, and sends the determined vessel ROI to the cardiac motion updating circuitry 140.

Based on an optimization cost function associated with the vessel ROI received from the vessel ROI determination circuitry 130, the cardiac motion updating circuitry 140 updates the estimated cardiac motion, and sends the updated cardiac motion to the image reconstruction circuitry 120. The updated cardiac motion is then used in the next pass of image reconstruction.

The image reconstruction circuitry 120, the vessel ROI determination circuitry 130, and the cardiac motion updating circuitry 140 conduct motion estimation and motion compensation in an iterative way, until a predefined termination criterion is met. Numerous optimization methods can be used to iteratively update motion based on the optimization cost function, including but not limited to, Gradient Descent, Stochastics Gradient Descent, Adam, and Newton's method.

Upon the termination criterion being met, the reconstructed image outputting circuitry 150 outputs the motion-compensated image generated in the last iteration, as the final image of the imaging object.

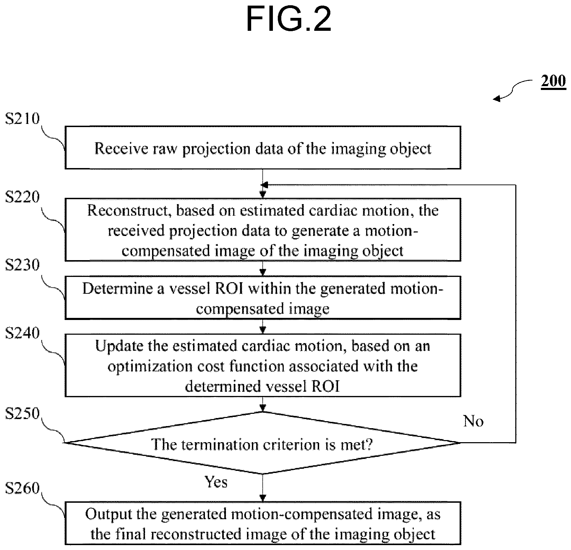

FIG. 2 shows a flow chart of an exemplary procedure 200 for performing cardiac motion estimation and compensation in a CT imaging system, in accordance with embodiments of the disclosure. As illustrated in FIG. 2, the procedure 200 starts with step S210 of receiving raw projection data of the imaging object.

In step S220, based on estimated cardiac motion, the received projection data is reconstructed to generate a motion-compensated image of the imaging object.

In step S230, a vessel ROI is determined within the generated motion-compensated image.

In step S240, the estimated cardiac motion is updated, based on an optimization cost function associated with the determined vessel ROI.

In step S250, it is determined whether a predefined termination criterion is met. The operations of steps S220, S230, S240, and S250 are iteratively conducted, until the termination criterion is met. When the determination result in step S250 is "Yes," the procedure 200 proceeds to step S260.

In step S260, the generated motion-compensated image is output as the final reconstructed image of the imaging object.

In the following, the workflow for implementing the combined motion estimation-compensation procedure will be described in detail, with reference to different embodiments.

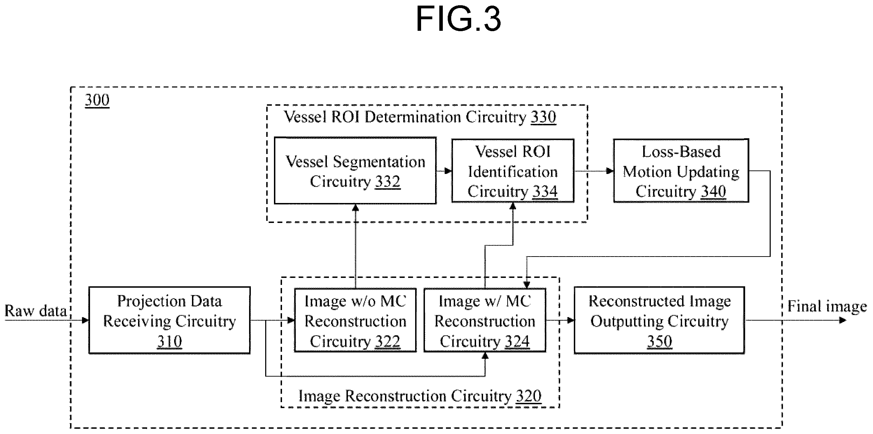

FIG. 3 shows a block diagram of an exemplary apparatus 300 for performing cardiac motion estimation and compensation in a CT imaging system, in accordance with one embodiment of the disclosure. The apparatus 300 includes projection data receiving circuitry 310, image reconstruction circuitry 320, vessel ROI determination circuitry 330, loss-based motion updating circuitry 340, and reconstructed image outputting circuitry 350.

As shown in FIG. 3, the image reconstruction circuitry 320 includes image without motion compensation (MC) reconstruction circuitry 322 and image with MC reconstruction circuitry 324; the vessel ROI determination circuitry 330 includes vessel segmentation circuitry 332 and vessel ROI identification circuitry 334. The projection data receiving circuitry 310 and the reconstructed image outputting circuitry 350 can be identical to the corresponding components of the apparatus 100 shown in FIG. 1, and thus, additional description is omitted to avoid redundancy.

The image without MC reconstruction circuitry 322 reconstructs the projection data received from the projection data receiving circuitry 310 and generates an image without motion compensation of the imaging object. Then, the image without MC reconstruction circuitry 322 sends the generated image to the vessel segmentation circuitry 332.

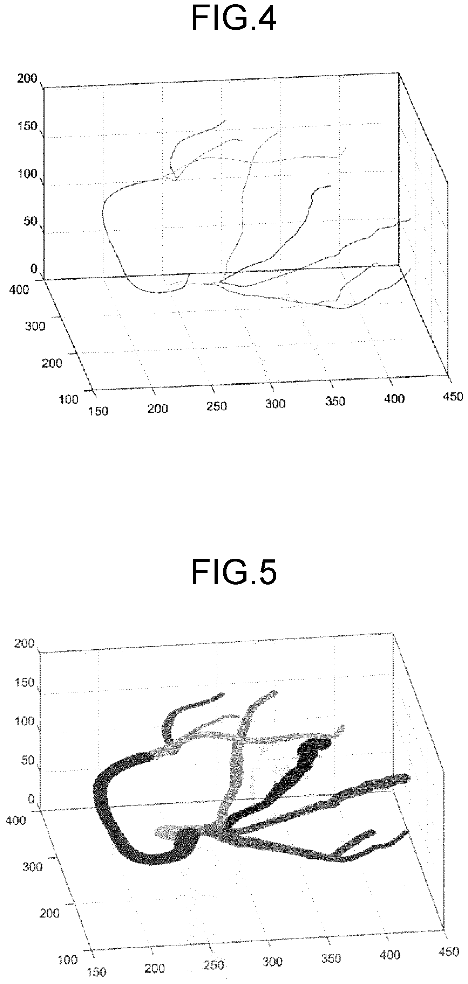

The vessel segmentation circuitry 332 performs vessel segmentation on the image received from the image without MC reconstruction circuitry 322, and develops a vessel region mask. The vessel region mask can cover a vessel tree structure and the extent of the vessel tree structure's motion. Detailed description of the vessel region mask is provided below in reference to FIGs. 4-5.

Based on estimated cardiac motion, the image with MC reconstruction circuitry 324 reconstructs the projection data received from the rejection data receiving circuitry 310 to generate a motion-compensated image of the imaging object, which is then sent to the vessel ROI identification circuitry 334.

Based on the vessel region mask received from the vessel segmentation circuitry 332, the vessel ROI identification circuitry 334 identifies a vessel ROI within the motion-compensated image.

The loss-based motion updating circuitry 340 receives the identified vessel ROI from the vessel ROI identification circuitry 334. Based on a loss function of the vessel ROI, the loss-based motion updating circuitry 340 updates the estimated cardiac motion. The updated cardiac motion is sent back to the image with MC reconstruction circuitry 324 for use in the next iteration.

As mentioned above, the vessel region mask can cover a vessel tree structure and the range of this structure's motion. The development of the vessel region mask can be divided into the following three steps.

The first step includes obtaining a cardiac vessel skeleton composed of centerlines of the cardiac vessels. For instance, one approach is to apply a vesselness filter to the image reconstructed without motion compensation, so as to extract the cardiac vessel skeleton. Various other vessel segmentation methods can also be used, including but not limited to, dynamic growing, AI based deep learning, etc. FIG. 4 shows an exemplary cardiac vessel skeleton extracted based on the image reconstructed without motion compensation, in accordance with one embodiment of the disclosure.

Secondly, a vessel template T(x, y, z) can be derived based on the cardiac vessel skeleton. The vessel template can represent a motion-free vessel tree structure. In the absence of motion, cardiac vessels take a cylindrical shape. Thus, a tubular region can be generated for each branch of the cardiac vessel skeleton, collectively forming a whole cardiac vessel tree structure. At the starting point of the branch, the tubular region can have a predefined radius. Along the axial direction of the branch, the radius of the tubular region can gradually decrease from the starting point to the endpoint. Each tubular region is constructed to mimic a corresponding vessel, with a common Hounsfield Unit (HU) value of that vessel assigned to the region. FIG. 5 shows an exemplary cardiac vessel tree developed based on the extracted cardiac vessel skeleton, in accordance with one embodiment of the disclosure. This tubular vessel tree can be used as the vessel template T(x, y, z).

However, due to the vessel's motion, it no longer maintains the ideal cylindrical shape. Consequently, the third step includes creating a vessel region mask M(x, y, z) based on the vessel template T(x, y, z). This mask M(x, y, z) encapsulates both the vessel template and the extent of its motion. That is, the mask not just covers the cylindrical area that mimics the ideal, motion-free vessel, but is large enough to cover the whole region contaminated or affected by the vessel's motion.

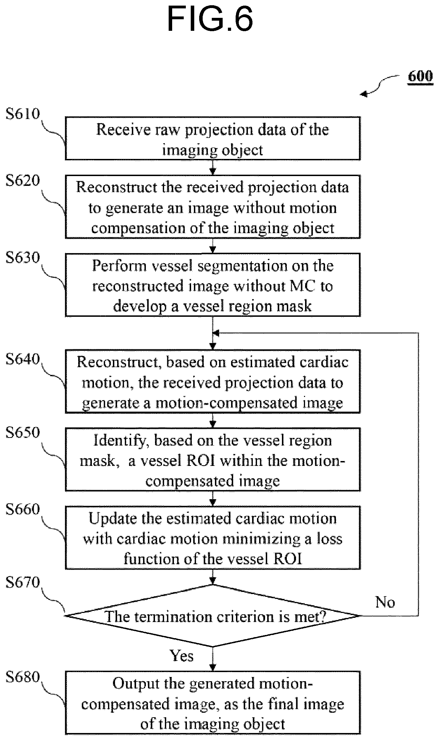

FIG. 6 shows a flow chart of an exemplary procedure 600 for performing cardiac motion estimation and compensation in a CT imaging system, in accordance with one embodiment of the disclosure.

In step S610, raw projection data of the imaging object is received. In step S620, the received projection data is reconstructed to generate an image without motion compensation. In step S630, vessel segmentation is performed on the reconstructed image without motion compensation to develop a vessel region mask M(x, y, z).

In step S640, based on estimated cardiac motion, the projection data is reconstructed to generate a motion-compensated image of the imaging object. For example, 4-dimensional non-rigid motion V(x, y, z, t) can be estimated to represent the cardiac motion during acquiring the projection data of the imaging object by the CT imaging system. For the first iteration, the estimated motion V(x, y, z, t) can be set to a predefined value, e.g., 0. By incorporating the estimated motion V(x, y, z, t) in the image reconstruction, a motion-compensated image of the imaging object can be obtained.

In step S650, based on the vessel region mask M(x, y, z) developed in step S630, a vessel ROI is identified within the reconstructed motion-compensated image. In step S660, cardiac motion is calculated to minimize a loss function of the vessel ROI, and then, the estimated cardiac motion V(x, y, z, t) is updated with the calculated cardiac motion. To reduce the blurriness in the vessel ROI, the loss function of optimization can be based on an entropy in the vessel ROI, an edge function of the vessel ROI, or the combination of both, for example.

For instance, the loss function can be formulated based on the gradient to describe edge information within the vessel ROI. Alternatively or additionally, histogram-based-entropy can be used to characterize the brightness of the vessel ROI. As the optimization advances, the edges within the vessel ROI can become sharper, and the vessel ROI can exhibit increased brightness, for example.

In step S670, it is determined whether a predefined termination criterion is met. Until the predefined termination criterion is met, the operations in step S640-S670 are iteratively executed. For instance, the termination criterion can be that the loss function converges to a predefined threshold, or the number of iterations reaches a predefined value.

For example, the iterative operations can terminate when either the loss change falls below 0.1%, or the number of iterations reaches 50.

When it is determined in step S670 that the termination criterion is met, the procedure 600 proceeds to step S680. In step S680, the motion-compensated image generated in the last iteration is output as the final image of the imaging object.

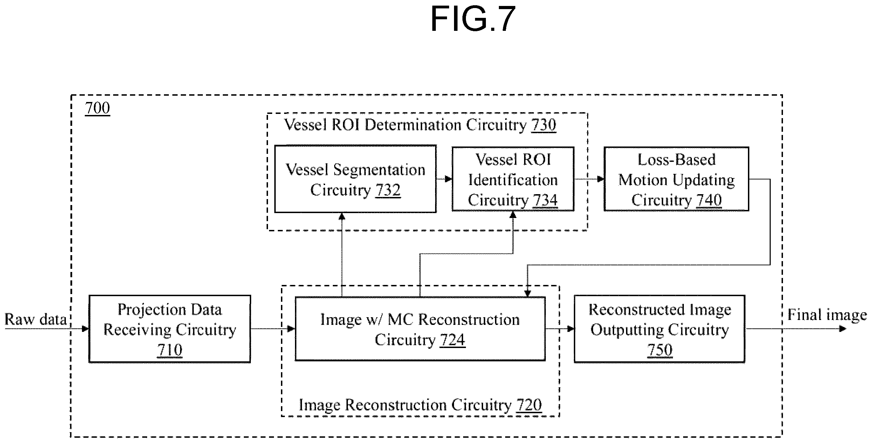

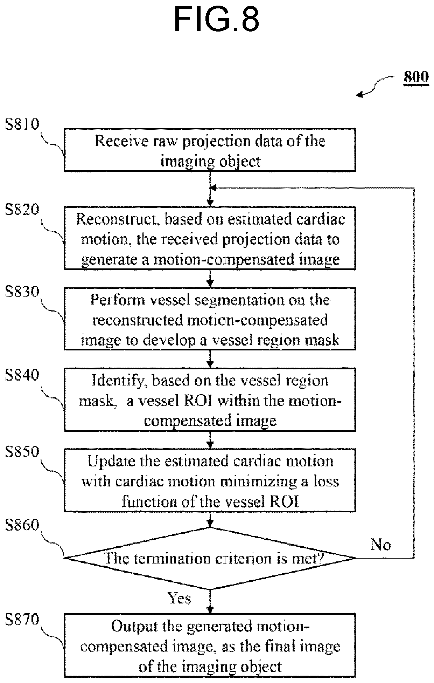

FIG. 7 shows a block diagram of an exemplary apparatus 700 for performing cardiac motion estimation and compensation in a CT imaging system, in accordance with one embodiment of the disclosure. FIG. 8 shows a flow chart of an exemplary procedure 800 for performing cardiac motion estimation and compensation in a CT imaging system, in accordance with one embodiment of the disclosure. The only difference of the embodiment shown in FIGs. 7-8 from the embodiment shown in FIGs. 3 and 6 is that the vessel region mask is developed based on the motion-compensated image, instead of the image without motion compensation. This means that in the embodiment of FIGs. 7-8, the developed vessel region mask can be continuously updated during the iterative operations.

As an alternative, the cardiac motion can be optimized based on other metrics. For example, in the following embodiment, a similarity between the vessel ROI and the vessel template is used as the optimization metric.

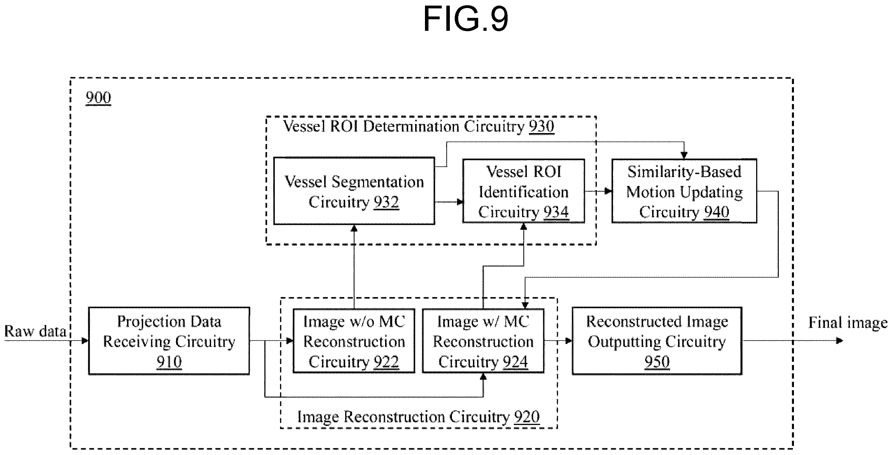

FIG. 9 shows a block diagram of an exemplary apparatus 900 for performing cardiac motion estimation and compensation in a CT imaging system, in accordance with one embodiment of the disclosure. The apparatus 900 includes projection data receiving circuitry 910, image reconstruction circuitry 920, vessel ROI determination circuitry 930, similarity-based motion updating circuitry 940, and reconstructed image outputting circuitry 950.

As the projection data receiving circuitry 910, the image reconstruction circuitry 920, and the reconstructed image outputting circuitry 950 are the same as the projection data receiving circuitry 310, the image reconstruction circuitry 320, and the reconstructed image outputting circuitry 350 of the apparatus 300 shown in FIG. 3, additional description is omitted.

The vessel ROI determination circuitry 930 includes vessel segmentation circuitry 932 and vessel ROI identification circuitry 934. The vessel segmentation circuitry 932 performs vessel segmentation on the generated image without motion compensation, to develop a vessel template and a vessel region mask. The vessel segmentation circuitry 932 sends the vessel template to the similarity-based motion updating circuitry 940, and sends the vessel region mask to the vessel ROI identification circuitry 934.

Likewise, in the embodiment of FIGs. 9-10, the vessel segmentation can be performed on the motion-compensated image as in the embodiment shown in FIGs. 7-8, instead of the image without motion compensation.

Based on the vessel region mask received, the vessel ROI identification circuitry 934 identifies the vessel ROI within the motion-compensated image generated by the image with MC reconstruction circuitry 924.

The similarity-based motion updating circuitry 940 receives the vessel ROI from the vessel ROI identification circuitry 934 and the vessel template from the vessel segmentation circuitry 932. The similarity-based motion updating circuitry 940 calculates cardiac motion that maximizes the similarity between the vessel ROI and the vessel template, and updates the estimated cardiac motion to the calculated cardiac motion. Then, the similarity-based motion updating circuitry 940 sends the updated cardiac motion to the image with MC reconstruction circuitry 924, for use in the next pass of image reconstruction.

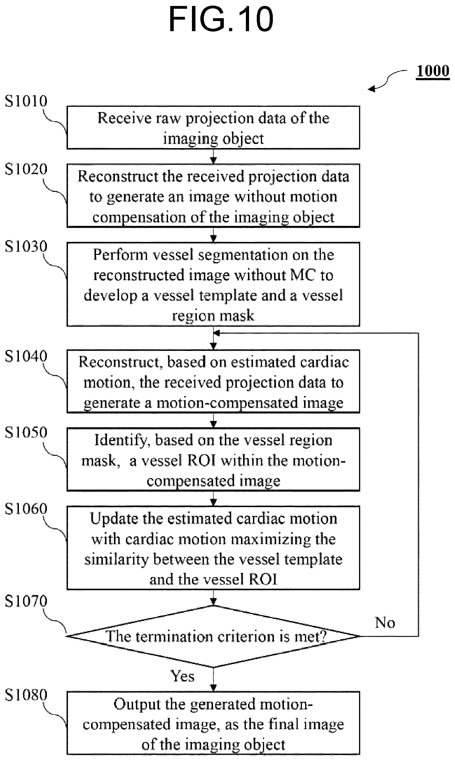

FIG. 10 shows a flow chart of an exemplary procedure 1000 for performing cardiac motion estimation and compensation in a CT imaging system, in accordance with one embodiment of the disclosure. In step S1010, the raw projection data of the imaging object is received. In step S1020, the projection data is reconstructed to generate an image without motion compensation of the imaging object. In step S1030, vessel segmentation is performed on the reconstructed image without motion compensation to develop a vessel template and a vessel region mask.

Until a predefined termination criterion is met, the operations in steps S1040-S1070 are conducted iteratively. For instance, the termination criterion can be that the similarity converges to a predefined threshold, or the number of iterations reaches a predefined value.

In step S1040, based on estimated cardiac motion, the received projection data is reconstructed to generate a motion-compensated image. In step S1050, based on the vessel region mask, a vessel ROI is identified within the reconstructed motion-compensated image. In step S1060, the estimated cardiac motion is updated with cardiac motion maximizing the similarity between the vessel template and the vessel ROI.

There are various metrics available to quantify the similarity between the vessel template and the vessel ROI extracted from the motion-compensated image. Common metrics include the Euclidean distance, Pearson's correlation, and cross-correlation, etc. For example, the objective of the optimization process can be to maximize the cross-correlation, thereby aligning the vessel template with the ROI region within the motion-compensated image as closely as possible. A cross-correlation value of 1.0 can indicate an exact match, while a value of 0 implies complete dissimilarity.

When it is determined in step S1070 that the termination criterion is met (i.e., the "Yes" prong of S1070), the procedure 1000 proceeds to step S1080. In step S1080, the motion-compensated image generated during the last iteration is output as the final image of the imaging object.

Alternatively, the cardiac motion can be optimized using a cost function that is based on both the loss function of the vessel ROI and the similarity between the vessel template and the vessel ROI. For example, the loss function and the similarity can be incorporated as weighted terms within the cost function. The loss function can correspond to a data term in the successive optimization, while the similarity can correspond to a regularization term for avoiding overlearning. Note that all the cost functions described in this disclosure are illustrative and not restrictive; those skilled in the art can recognize that other forms of optimization metrics are possible.

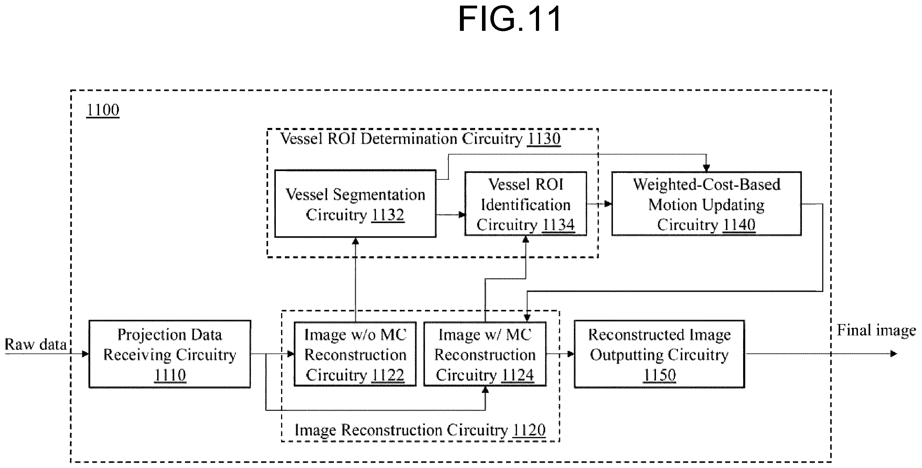

FIG. 11 shows a block diagram of an exemplary apparatus 1100 for performing cardiac motion estimation and compensation in a CT imaging system, in accordance with one embodiment of the disclosure. The projection data receiving circuitry 1110, the image reconstruction circuitry 1120, and the reconstructed image outputting circuitry 1150 of the apparatus 1100 can be the same as the projection data receiving circuitry 310, the image reconstruction circuitry 320, and the reconstructed image outputting circuitry 350 of the apparatus 300 shown in FIG. 3, and the vessel segmentation circuitry 1130 can be the same as the vessel segmentation circuitry 930 of the apparatus 900 shown in FIG. 9.

The weighted-cost-based motion updating circuitry 1140 receives the vessel ROI from the vessel ROI identification circuitry 1134 and the vessel template from the vessel segmentation circuitry 1132. The weighted-cost-based motion updating circuitry 1140 calculates cardiac motion that optimizes a cost function based on weighted terms including a loss function of the vessel ROI and a similarity between the vessel ROI and the vessel template, and updates the estimated cardiac motion to the calculated cardiac motion. Then, the weighted-cost-based motion updating circuitry 1140 sends the updated cardiac motion to the image with MC reconstruction circuitry 1124, for use in the next pass of image reconstruction.

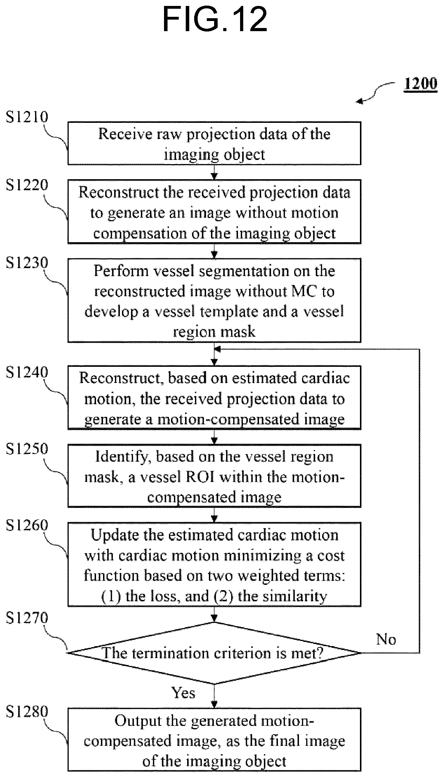

FIG. 12 shows a flow chart of an exemplary procedure 1200 for performing cardiac motion estimation and compensation in a CT imaging system, in accordance with one embodiment of the disclosure.

In step S1210, raw projection data of the imaging object is received. In step S1220, the received projection data is reconstructed to generate an image without motion compensation of the imaging object. In step S1230, vessel segmentation is performed on the reconstructed image without motion compensation to develop a vessel template and a vessel region mask.

The operations of steps S1240-S1270 are performed iteratively until a predetermined termination criterion is met. For instance, the termination criterion can be that the cost function converges to a predefined threshold, or the number of iterations reaches a predefined value.

In step S1240, based on estimated cardiac motion, the received projection data is reconstructed to generate a motion-compensated image. In step S1250, based on the vessel region mask, a vessel ROI is identified within the reconstructed motion-compensated. In step S1260, the estimated cardiac motion is updated with cardiac motion optimizing the cost function that is based on the loss function of the vessel ROI and the similarity between the vessel ROI and the vessel template.

When it is determined in step S1270 that the termination criterion is met (i.e., the "Yes" prong of S1270), the procedure 1200 proceeds to step S1280. In step S1280, the motion-compensated image generated during the last iteration is output as the final image of the imaging object.

Again, in the embodiment of FIGs. 11-12, the vessel segmentation can be performed on the motion-compensated image as in the embodiment shown in FIGs. 7-8, instead of the image without motion compensation.

While the above embodiments are described in the context of cardiac CT imaging, those skilled in the art can recognize that the approaches can be applied to the imaging of other vessel structures, without departing from the spirit and scope of the disclosure.

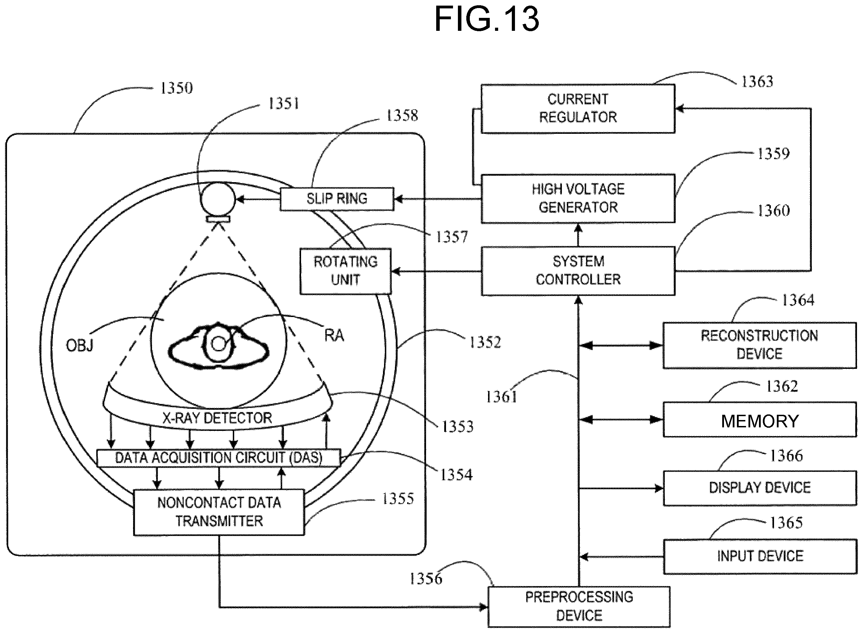

FIG. 13 is a schematic block diagram of a CT apparatus or scanner, according to one embodiment of the present disclosure. As shown in FIG. 13, a radiography gantry 1350 is illustrated from a side view and further includes an X-ray tube 1351, an annular frame 1352, and a multi-row or two-dimensional-array-type X-ray detector 1353. The X-ray tube 1351 and X-ray detector 1353 are diametrically mounted across an object OBJ on the annular frame 1352, which is rotatably supported around a rotation axis RA. A rotating unit 1357 rotates the annular frame 1352 at a high speed, such as 0.4 sec/rotation, while the object OBJ is being moved along the axis RA into or out of the illustrated page.

An embodiment of an X-ray CT apparatus according to the present disclosure will be described below with reference to the views of the accompanying drawing. Note that X-ray CT apparatuses include various types of apparatuses, e.g., a rotate/rotate-type apparatus in which an X-ray tube and X-ray detector rotate together around an object to be examined, and a stationary/rotate-type apparatus in which many detection elements are arrayed in the form of a ring or plane, and only an X-ray tube rotates around an object to be examined. The present disclosure can be applied to either type. In this case, the rotate/rotate-type, which is currently the mainstream, will be exemplified.

The multi-slice X-ray CT apparatus further includes a high voltage generator 1359 that generates a tube voltage applied to the X-ray tube 1351 through a slip ring 1358 so that the X-ray tube 1351 generates X-rays. The X-rays are emitted towards the object OBJ, whose cross-sectional area is represented by a circle. For example, the X-ray tube 1351 having an average X-ray energy during a first scan that is less than an average X-ray energy during a second scan. Thus, two or more scans can be obtained corresponding to different X-ray energies. The X-ray detector 1353 is located at an opposite side from the X-ray tube 1351 across the object OBJ for detecting the emitted X-rays that have transmitted through the object OBJ. The X-ray detector 1353 further includes individual detector elements or units.

The CT apparatus further includes other devices for processing the detected signals from the X-ray detector 1353. A data acquisition circuit or a Data Acquisition System (DAS) 1354 converts a signal output from the X-ray detector 1353 for each channel into a voltage signal, amplifies the signal, and further converts the signal into a digital signal. The X-ray detector 1353 and the DAS 1354 are configured to handle a predetermined total number of projections per rotation (TPPR) .

The above-described data is sent to a preprocessing device 1356, which is housed in a console outside the radiography gantry 1350 through a non-contact data transmitter 1355. The preprocessing device 1356 performs certain corrections, such as sensitivity correction, on the raw data. A memory 1362 stores the resultant data, which is also called projection data at a stage immediately before reconstruction processing. The memory 1362 is connected to a system controller 1360 through a data/control bus 1361, together with a reconstruction device 1364, input device 1365, and display 1366. The system controller 1360 controls a current regulator 1363 that limits the current to a level sufficient for driving the CT system.

The detectors are rotated and/or fixed with respect to the patient among various generations of the CT scanner systems. In one implementation, the above-described CT system can be an example of a combined third-generation geometry and fourth-generation geometry system. In the third-generation system, the X-ray tube 1351 and the X-ray detector 1353 are diametrically mounted on the annular frame 1352 and are rotated around the object OBJ as the annular frame 1352 is rotated about the rotation axis RA. In the fourth-generation geometry system, the detectors are fixedly placed around the patient and an X-ray tube rotates around the patient. In an alternative embodiment, the radiography gantry 1350 has multiple detectors arranged on the annular frame 1352, which is supported by a C-arm and a stand.

The memory 1362 can store the measurement value representative of the irradiance of the X-rays at the X-ray detector unit 1353. Further, the memory 1362 can store a dedicated program for executing the CT image reconstruction, material decomposition, and motion estimation and motion compensation methods including the methods described herein.

The reconstruction device 1364 can execute the above-referenced methods, described herein. Further, reconstruction device 1364 can execute pre-reconstruction processing image processing such as volume rendering processing and image difference processing as needed.

The pre-reconstruction processing of the projection data performed by the preprocessing device 1356 can include correcting for detector calibrations, detector nonlinearities, and polar effects, for example.

Post-reconstruction processing performed by the reconstruction device 1364 can include filtering and smoothing the image, volume rendering processing, and image difference processing, as needed. The image reconstruction process can be performed using filtered back projection, iterative image reconstruction methods, or stochastic image reconstruction methods. The reconstruction device 1364 can use the memory to store, e.g., projection data, reconstructed images, calibration data and parameters, and computer programs.

The reconstruction device 1364 can include a CPU (processing circuitry) that can be implemented as discrete logic gates, as an Application Specific Integrated Circuit (ASIC), a Field Programmable Gate Array (FPGA) or other Complex Programmable Logic Device (CPLD). An FPGA or CPLD implementation may be coded in VDHL, Verilog, or any other hardware description language and the code may be stored in an electronic memory directly within the FPGA or CPLD, or as a separate electronic memory. Further, the memory 1362 can be non-volatile, such as ROM, EPROM, EEPROM or FLASH memory. The memory 1362 can also be volatile, such as static or dynamic RAM, and a processor, such as a microcontroller or microprocessor, can be provided to manage the electronic memory as well as the interaction between the FPGA or CPLD and the memory.

Alternatively, the CPU in the reconstruction device 1364 can execute a computer program including a set of computer-readable instructions that perform the functions described herein, the program being stored in any of the above-described non-transitory electronic memories and/or a hard disc drive, CD, DVD, FLASH drive or any other known storage media. Further, the computer-readable instructions may be provided as a utility application, background daemon, or component of an operating system, or combination thereof, executing in conjunction with a processor, such as a Xeon processor from Intel of America or an Opteron processor from AMD of America and an operating system, such as Microsoft 10, UNIX, Solaris, LINUX, Apple, MAC-OS and other operating systems known to those skilled in the art. Further, CPU can be implemented as multiple processors cooperatively working in parallel to perform the instructions.

In one implementation, the reconstructed images can be displayed on a display 1366. The display 1366 can be an LCD display, CRT display, plasma display, OLED, LED or any other display known in the art.

The memory 1362 can be a hard disk drive, CD-ROM drive, DVD drive, FLASH drive, RAM, ROM or any other electronic storage known in the art.

Numerous modifications and variations of the embodiments presented herein are possible in light of the above teachings. It is therefore to be understood that within the scope of the claims, the application may be practiced otherwise than as specifically described herein. The inventions are not limited to the examples that have just been described; it is in particular possible to combine features of the illustrated examples with one another in variants that have not been illustrated.

## Claims

1. A method for performing cardiac motion compensation in a computed tomography (CT) imaging system, the method comprising:
receiving projection data acquired from an imaging object by the CT imaging system;
until a predefined termination criterion is met, iteratively reconstructing, based on estimated cardiac motion, the received projection data to generate a motion-compensated image of the imaging object,
determining a vessel region of interest (ROI) within the generated motion-compensated image, and
updating the estimated cardiac motion, based on an optimization cost function associated with the determined vessel ROI; and
outputting, as a final reconstructed image of the imaging object, the generated motion-compensated image.

2. The method of claim 1, wherein for a first iteration, the estimated cardiac motion is set to a predefined value.

3. The method of claim 1 or 2, wherein the predefined termination criterion is:
that a predefined number of iterations are completed, or that the optimization cost function reaches a predefined threshold.

4. The method of claim 1, further comprising:
reconstructing the received projection data to generate an image without motion compensation of the imaging object; and
performing, based on the generated image without motion
compensation, vessel segmentation to develop a vessel region mask,
wherein the determining step further comprises
identifying, based on the developed vessel region mask, a region within the generated motion-compensated image, as the determined vessel ROI, and the updating step further comprises:
calculating cardiac motion to minimize a loss function of the determined vessel ROI, and
updating the estimated cardiac motion to the calculated cardiac motion.

5. The method of claim 4, wherein the step of performing vessel segmentation further comprises:
extracting a cardiac vessel skeleton, based on the generated image without motion compensation, and
forming the developed vessel region mask by generating a region for each branch of the extracted cardiac vessel skeleton, the region covering a tubular area and an extent of motion of the tubular area, the tubular area representing a vessel corresponding to the branch of the extracted cardiac vessel skeleton.

6. The method of claim 5, wherein the extracting step further comprises:
executing, on the generated image without motion compensation, vesselness-filtering-based, dynamic-growing-based, or deep-learning-based vessel segmentation to extract the cardiac vessel skeleton.

7. The method of claim 4, wherein the loss function is based on an entropy of the determined vessel ROI, an edge function of the determined vessel ROI, or a combination thereof.

8. The method of claim 1, wherein
the determining step further comprises:
performing, based on the generated motion-compensated image, vessel segmentation to develop a vessel region mask, and
identifying, based on the developed vessel region mask, a region within the generated motion-compensated image, as the determined vessel ROI, and
the updating step further comprises:
calculating cardiac motion to minimize a loss function of the determined vessel ROI, and
updating the estimated cardiac motion to the calculated cardiac motion.

9. The method of claim 8, wherein the step of performing vessel segmentation further comprises:
extracting a cardiac vessel skeleton, based on the generated motion-compensated image, and
forming the developed vessel region mask by generating a region for each branch of the extracted cardiac vessel skeleton, the region covering a tubular area and an extent of motion of the tubular area, the tubular area representing a vessel corresponding to the branch of the extracted cardiac vessel skeleton.

10. The method of claim 1, further comprising:
reconstructing the received projection data to generate an image without motion compensation of the imaging object; and
performing, based on the generated image without motion compensation, vessel segmentation to develop a vessel template and a vessel region mask, wherein
the determining step further comprises identifying, based on the developed vessel region mask, a region within the generated motion-compensated image, as the determined vessel ROI, and
the updating step further comprises:
calculating cardiac motion to maximize a similarity between the determined vessel ROI and the developed vessel template, and
updating the estimated cardiac motion to the calculated cardiac motion.

11. The method of claim 10, wherein the step of performing vessel segmentation further comprises:
extracting a cardiac vessel skeleton, based on the generated image without motion compensation,
forming the developed vessel template by generating a tubular area for each branch of the extracted cardiac vessel skeleton, the tubular area representing a vessel corresponding to the branch of the extracted cardiac vessel skeleton, and
forming the developed vessel region mask by generating a region for each branch of the extracted cardiac vessel skeleton, the region covering the tubular area and an extent of motion of the tubular area.

12. The method of claim 1, wherein
the determining step further comprises:
performing, based on the generated motion-compensated image, vessel segmentation to develop a vessel region mask and a vessel template, and
identifying, based on the developed vessel region mask, a region within the generated motion-compensated image, as the determined vessel ROI, and
the updating step further comprises:
calculating cardiac motion to maximize a similarity between the determined vessel ROI and the developed vessel template, and
updating the estimated cardiac motion to the calculated cardiac motion.

13. The method of claim 1, further comprising:
reconstructing the received projection data to generate an image without motion compensation of the imaging object; and
performing, based on the generated image without motion compensation, vessel segmentation to develop a vessel template and a vessel region mask, wherein
the determining step further comprises identifying, based on the developed vessel region mask, a region within the generated motion-compensated image, as the determined vessel ROI, and
the updating step further comprises:
calculating cardiac motion to minimize an optimization cost function, weighted terms of the optimization cost function including a loss function of the determined vessel ROI, and a similarity between the determined vessel ROI and the developed vessel template, and
updating the estimated cardiac motion to the calculated cardiac motion.

14. The method of claim 13, wherein the step of performing vessel segmentation further comprises:
extracting a cardiac vessel skeleton, based on the generated image without motion compensation,
forming the developed vessel template by generating a tubular area for each branch of the extracted cardiac vessel skeleton, the tubular area representing a vessel corresponding to the branch of the extracted cardiac vessel skeleton, and forming the developed vessel region mask by generating a region for each branch of the extracted cardiac vessel skeleton, the region covering the tubular area and an extent of motion of the tubular area.

15. The method of any one of claims 5, 9, 11 and 14, wherein the tubular area is centered around the branch of the extracted cardiac vessel skeleton and has a radius equal to a predefined value at a starting point of the branch, wherein along an axial direction of the branch, the radius of the tubular area gradually decreases from the starting point to an endpoint of the branch.

16. The method of claim 1, wherein
the determining step further comprises:
performing, based on the generated motion-compensated image, vessel segmentation to develop a vessel region mask and a vessel template, and
identifying, based on the developed vessel region mask, a region within the generated motion-compensated image, as the determined vessel ROI, and
the updating step further comprises:
calculating cardiac motion to minimize an optimization cost function, weighted terms of the optimization cost function including a loss function of the determined vessel ROI, and a similarity between the determined vessel ROI and the developed vessel template, and
updating the estimated cardiac motion to the calculated cardiac motion.

17. An apparatus for performing cardiac motion compensation in a computed tomography (CT) imaging system, comprising: processing circuitry (1364) configured to
receive projection data acquired from an imaging object by the CT imaging system;
until a predefined termination criterion is met, iteratively reconstruct, based on estimated cardiac motion, the received projection data to generate a motion-compensated image of the imaging object,
determine a vessel region of interest (ROI) within the generated motion-compensated image, and
update the estimated cardiac motion, based on an optimization cost function associated with the determined vessel ROI; and
output, as a final reconstructed image of the imaging object, the generated motion-compensated image.
